# DEMANDE DE BREVET EUROPEEN

(11) **EP 4 821 779 A1**
(43) Date de publication de la demande: **14.10.2026**
(21) Numéro de dépôt: 26162113.0
(22) Date de dépôt: 03.03.2026
(51) Int. Cl.: B60W 40/10

(54) **PROCÉDÉ ET DISPOSITIF DE CONTRÔLE D'UN SYSTÈME DE RÉGULATION ADAPTATIF DE VITESSE PRÉDICTIF D'UN VÉHICULE**

(30) Priorité: 07.04.2025 FR 2503643
(71) Demandeur: Stellantis Auto SAS, 78300 Poissy (FR)
(72) Inventeur: BOUHAL, AYOUB, 20270 SIDI MAAROUF (CASABLANCA) (MA); ABOULISSANE, BADREDDINE, 20270 SIDI MAAROUF (CASABLANCA) (MA)
(74) Mandataire: ESIP

(57) **Abrégé**

La présente invention concerne un procédé et un dispositif de contrôle d'un système de régulation adaptative de vitesse prédictif d'un véhicule, ledit véhicule circulant sur une route d'un itinéraire routier calculé par un système de navigation embarqué du véhicule, ledit procédé reçoit (31) une position géographique prédite du véhicule à partir de données de navigation fournies par le système de navigation ; obtient (32) un état d'activation de clignotants du véhicule et calcule un premier facteur de correction selon l'état d'activation obtenu des clignotants du véhicule ; obtient (33) une valeur d'angle du volant du véhicule et calcule d'un deuxième facteur de correction selon la valeur d'angle obtenue du volant du véhicule ; et corrige (34) la position géographique prédite du véhicule par décalage de la position géographique prédite d'une valeur égale à la somme des premier et deuxième facteurs de correction.

## Description

### Domaine technique

La présente invention concerne les procédés et dispositifs de contrôle d'un système de régulation adaptatif de vitesse prédictif d'un véhicule, notamment un véhicule automobile.

### Arrière-plan technologique

La sécurité routière fait partie des enjeux importants de nos sociétés. Avec l'augmentation du nombre de véhicules circulant sur les réseaux routiers du monde entier, et ce quelle que soient les conditions de circulation, les risques d'accidents et d'incidents provoqués par les conditions de circulation n'ont jamais été aussi importants.

Pour améliorer la sécurité routière, certains véhicules contemporains sont équipés de fonctions ou systèmes d'aide à la conduite, dits ADAS (de l'anglais « Advanced Driver-Assistance System » ou en français « Système d'aide à la conduite avancé »). Les systèmes ADAS mettent par exemple en œuvre des procédés basés sur la connaissance de l'environnement routier dans lequel le véhicule circule. La connaissance de cet environnement est par exemple obtenue à partir de données de cartographies de l'environnement et/ou de données obtenues d'un ou plusieurs capteurs embarqués dans le véhicule, tels que des caméras, radars, ou encore lidars (de l'anglais « Light Detection And Ranging », ou « Détection et estimation de la distance par la lumière » en français).

L'un de ces systèmes ADAS est le système de régulation adaptatif de vitesse prédictif dit système PACC de l'anglais « Predictive Adaptive Cruise Control », qui prédit, selon une probabilité, une position géographique du véhicule le long d'une trajectoire déterminée sur la base de données de navigation du véhicule. Pour assurer le bon fonctionnement de ce système, il est alors important que la probabilité de cette position géographique prédite du véhicule soit élevée. Ce n'est pas toujours le cas des systèmes de régulation adaptatif de vitesse prédictif actuels qui basent leur calcul de prédiction de position géographique sur des données de navigation du véhicule.

### Résumé de la présente invention

Un objet de la présente invention est de résoudre au moins l'un des problèmes de l'arrière-plan technologique décrit précédemment.

Un autre objet de la présente invention est d'améliorer le fonctionnement des systèmes de régulation adaptatif de vitesse prédictif actuels.

Un autre objet de la présente invention est d'améliorer la sécurité routière.

Selon un premier aspect, la présente invention concerne un procédé de procédé de contrôle d'un système de régulation adaptative de vitesse prédictif d'un véhicule, ledit véhicule circulant sur une route d'un itinéraire routier calculé par un système de navigation embarqué du véhicule, ledit procédé comprenant les étapes suivantes :
- réception d'une position géographique prédite du véhicule à partir de données de navigation fournies par le système de navigation ;
- obtention d'un état d'activation de clignotants du véhicule et calcul d'un premier facteur de correction selon l'état d'activation obtenu des clignotants du véhicule ;
- obtention d'une valeur d'angle du volant du véhicule et calcul d'un deuxième facteur de correction selon la valeur d'angle obtenue du volant du véhicule ; et
- correction de la position géographique prédite du véhicule par décalage de la position géographique prédite d'une valeur égale à la somme des premier et deuxième facteurs de correction.

La correction est basée sur le premier facteur qui décale la position géographique prédite en fonction de l'activation des clignotants, c'est-à-dire selon le souhait du conducteur de véhicule de changer de trajectoire. Ce décalage de la position géographique prédite du véhicule est en somme logique, étant donné que le conducteur du véhicule s'apprête à changer de trajectoire lorsqu'il a activé l'un des clignotants du véhicule. Cette information n'est pas connue des systèmes de régulation adaptatif de vitesse prédictif qui sont basés uniquement sur des données de navigation. Le décalage est également basé sur l'angle du volant ce qui permet de prédire précisément quel va être le décalage imminent de la position géographique du véhicule par exemple dans un virage. Par exemple, la trajectoire du véhicule peut être modifiée pour que le véhicule change de voie de circulation ou pour changer de route lors d'une prochaine intersection définie par les données de navigation du système de navigation.

La correction est en outre basée sur le deuxième facteur qui décale la position géographique prédite en fonction d'un angle du volant du véhicule. L'angle de volant du véhicule est un indicateur fiable qui indique comment le véhicule suit une courbure de la route ou comment le véhicule change de voie.

La correction, selon le procédé, de la position géographique prédite du véhicule basée sur le premier et deuxième facteurs permet d'augmenter la précision de la prédiction de la position géographique du véhicule selon le souhait du conducteur du véhicule et selon sa manière de conduire. Ce qui permet d'augmenter la probabilité que la position géographique réelle du véhicule soit à cette position géographique prédite corrigée dans très peu de temps augmentant ainsi la précision des prévisions de dangers ou d'obstacles sur la route et donc d'améliorer la sécurité routière.

Selon une variante, le premier facteur de correction peut être défini comme étant un produit d'une valeur de décalage selon une direction indiquée par un clignotant activé, d'une valeur binaire qui vaut 1 si un clignotant du véhicule est activé et 0 sinon, et d'une première valeur de pondération prédéterminée définissant l'importance du premier facteur de correction dans la correction de la position géographique prédite du véhicule.

Selon une variante, le deuxième facteur de correction peut être défini comme étant un produit de la valeur d'angle obtenue du volant du véhicule, de la vitesse du véhicule et d'une deuxième valeur de pondération prédéterminée définissant l'importance du deuxième facteur de correction dans la correction de la position géographique prédite du véhicule.

Selon une variante, le procédé peut comprendre en outre une étape d'obtention de premières données représentatives d'une popularité de la route sur laquelle circule le véhicule et de deuxièmes données représentatives d'une popularité de routes alternatives sur lesquelles pourraient circuler le véhicule pour atteindre sa destination, de calcul d'un troisième facteur de correction selon les premières et deuxièmes données et de correction de la position géographique prédite du véhicule par décalage de la position géographique prédite d'une valeur égale à la somme des premier, deuxième et troisième facteurs de correction.

Certaines routes (comme les autoroutes ou les routes principales) peuvent avoir une plus grande probabilité que le véhicule reste sur la route définie par le système de navigation en raison de sa popularité (fréquentation, réputation de la qualité de la chaussée, points touristiques remarquables, points de ravitaillement, etc.) et du trafic routier courant sur cette route. La prise en compte de la popularité de la route sur laquelle circule le véhicule ainsi que de celle de routes alternatives permet d'influencer la position géographique prédite car elle est représentative du comportement d'un conducteur qui peut être influencé pour emprunter les routes les plus populaires.

Selon une variante, le troisième facteur de correction peut être défini comme étant un produit d'une valeur binaire qui vaut 1 pour indiquer si la route sur laquelle circule le véhicule est la plus populaire des routes alternatives sur lesquelles il pourrait circuler pour atteindre sa destination, et 0 pour indiquer si la route sur laquelle circule actuellement le véhicule n'est pas la plus populaire des routes, une valeur de décalage pour inciter le véhicule à rejoindre une route alternative plus populaire que celle sur laquelle il circule actuellement et d'une troisième valeur de pondération prédéterminée définissant l'importance du troisième facteur de correction dans la correction de la position géographique prédite du véhicule.

Selon une variante, le procédé peut comprendre en outre une étape d'obtention de troisièmes données représentatives d'une position géographique d'une ligne centrale de la route sur laquelle circule le véhicule, de calcul d'un quatrième facteur de correction selon des écarts de position géographique entre la position géographique de la ligne centrale et la position géographique prédite et de correction de la position géographique prédite du véhicule par décalage de la position géographique prédite d'une valeur égale soit à la somme des premier, deuxième et quatrième facteurs de correction soit à la somme des premier, deuxième, troisième et quatrième facteurs de correction.

La prise en compte de la position géographique de la ligne centrale de la route permet de corriger la position géographique prédite du véhicule lors d'un changement de voie par exemple en accentuant une valeur de décalage de la position géographique prédite du véhicule d'une valeur dépendante de l'écart entre la position géographique prédite du véhicule et la position géographique de la ligne centrale.

Selon une variante, le quatrième facteur de correction peut être défini comme étant un produit d'un écart de position géographique entre la position géographique de la ligne centrale et la position géographique prédite du véhicule et d'une quatrième valeur de pondération prédéterminée définissant l'importance du quatrième facteur de correction dans la correction de la position géographique prédite du véhicule.

Selon un deuxième aspect, la présente invention concerne un dispositif de contrôle d'un système de régulation adaptative de vitesse prédictif d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

Selon un sixième aspect, la présente invention concerne d'un système de régulation adaptative de vitesse prédictif d'un véhicule comprenant le dispositif selon le deuxième aspect de la présente invention.

### Brève description des figures

D'autres caractéristiques et avantages de la présente invention ressortiront de la description des exemples de réalisation particuliers et non limitatifs de la présente invention ci-après, en référence aux figures 1 à 3 annexées, sur lesquelles :
[Fig. 1] illustre schématiquement un environnement 1 dans lequel évolue un véhicule, selon un exemple de réalisation particulier et non limitatif de la présente invention ;
[Fig. 2] illustre schématiquement un dispositif configuré pour contrôler un système de régulation adaptatif de vitesse prédictif du véhicule de la figure 1, selon un exemple de réalisation particulier et non limitatif de la présente invention ;
[Fig. 3] illustre un organigramme des différentes étapes de contrôle d'un système de régulation adaptatif de vitesse prédictif d'un véhicule de la figure 1, selon un exemple de réalisation particulier et non limitatif de la présente invention.

### Description des exemples de réalisation

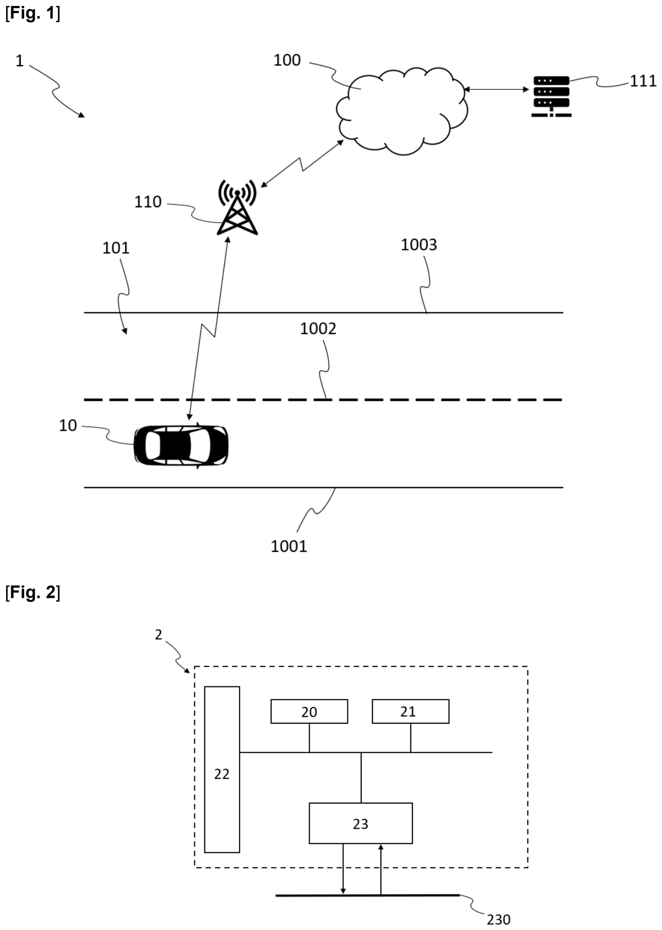

Un procédé et un dispositif de contrôle d'un système de régulation adaptatif de vitesse prédictif d'un véhicule vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de la présente invention, le contrôle d'un système de régulation adaptatif de vitesse prédictif d'un véhicule circulant sur une route d'un itinéraire routier calculé par un système de navigation embarqué du véhicule comprend la réception, à un instant temporel déterminé correspondant par exemple à un instant courant, une position géographique prédite du véhicule à partir de données de navigation fournies par le système de navigation. Un état d'activation des clignotants du véhicule est également obtenu et un premier facteur de correction est calculé selon l'état d'activation obtenu des clignotants du véhicule. Une valeur d'angle du volant du véhicule est obtenue et un deuxième facteur de correction selon la valeur d'angle obtenue du volant du véhicule est calculé. La correction de la position géographique prédite du véhicule est corrigée par décalage de la position géographique prédite d'une valeur égale à la somme des premier et deuxième facteurs de correction.

La figure 1 illustre schématiquement un environnement 1 dans lequel évolue un véhicule 10, selon un exemple de réalisation particulier et non limitatif de la présente invention.

Le véhicule 10 correspond par exemple à un véhicule automobile évoluant dans un environnement routier 1 comprenant une ou plusieurs routes ou portions de route.

Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond par exemple à un véhicule circulant dans un mode autonome ou semi-autonome sur une route 101. Le véhicule 10 circule par exemple selon un niveau d'autonomie supérieur ou égal à 2, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Le véhicule 10 embarque un ou plusieurs systèmes ADAS. De tels systèmes ADAS sont configurés pour assister, voire remplacer, le conducteur du véhicule 10 pour contrôler le véhicule 10 sur son parcours.

Le véhicule 10 embarque par exemple à cet effet un ou plusieurs des systèmes ADAS suivants en plus du système PACC :
- système d'adaptation intelligente de la vitesse, dit système ISA (de l'anglais « Intelligent Speed Adaptation ») ; et/ou
- système d'adaptation de la vitesse en virage, dit système CSA (de l'anglais « Curve Speed Assist ») ; et/ou
- système de contrôle électronique de stabilité, dit système ESC (de l'anglais « Electronic Stability Control » ou en français « Contrôle électronique de la stabilité »), DSC (de l'anglais « Dynamic Stability Control » ou en français « Contrôle dynamique de la stabilité ») ou encore ESP (de l'anglais « Electronic Stability Program » ou en français « Programme électronique de la stabilité ») ; et/ou
- système d'aide au maintien dans la file de circulation du véhicule, dit système LKA (de l'anglais « Lane-Keeping Assist » ou en français « Assistant de maintien dans la file ») ou LPA (de l'anglais « Lane Positioning Assist » ou en français « Assistant de positionnement dans la file ») ; et/ou
- système de changement semi-automatique de voie de circulation (de l'anglais SALC de l'anglais « Semi Automatic Lane Change »).

Les exemples de systèmes ADAS de la liste ci-dessus sont fournis à titre illustratif et ne sont pas limitatifs, cette liste n'étant pas exhaustive.

Les systèmes ADAS embarqués dans le véhicule 10 sont par exemple alimentés par des données obtenues d'un ou plusieurs capteurs embarqués, tels que par exemple des radars, LIDARs et/ou caméras, et/ou de données reçues d'une infrastructure de communication.

Le véhicule 10 comprend un capteur configuré pour détecter, à un instant temporel t, l'état d'activation d'un clignotant et pour fournir une valeur binaire B qui vaut 1 si un clignotant du véhicule 10 est activé et 0 sinon. Un clignotant activé indique une direction vers laquelle le véhicule 10 est sensé aller d'ici peu.

Le véhicule 10 comprend un capteur de mesure d'une valeur d'angle *θ*(*t*) du volant du véhicule 10 à un instant temporel t.

Le véhicule 10 peut comprendre un capteur de vitesse qui fournit des composantes *Vₓ*(*t*) et *V_{y}*(*t*) de vitesse du véhicule 10 définies dans un plan bidimensionnel.

Le véhicule 10 embarque un récepteur d'un système de géolocalisation par satellite de type GPS (de l'anglais « Global Positioning System » ou en français « Système mondial de positionnement ») ou le système Galileo par exemple en communication avec un calculateur du système embarqué du véhicule 10.

Selon un exemple particulier de réalisation, le véhicule 10 peut embarquer un système de communication configuré pour communiquer avec un ou plusieurs dispositifs distants 111 via une infrastructure d'un réseau de communication sans fil. Le dispositif distant 111 correspond par exemple à un serveur du « cloud » 100 (ou « nuage » en français). L'infrastructure de communication sans fil comprend par exemple un ensemble de dispositifs de communication 110 de type antenne de réseau cellulaire de type LTE 4G ou 5G ou de type UBR (Unité Bord de Route).

Le système de communication du véhicule 10 comprend par exemple une ou plusieurs antennes de communication reliées à une unité de contrôle télématique, dite TCU (de l'anglais « Telematic Control Unit »), elle-même reliée à un ou plusieurs calculateurs du système embarqué du véhicule 10, notamment un ou plusieurs calculateurs en charge de contrôler les systèmes ADAS du véhicule 10. La ou les antennes, l'unité TCU et le ou les calculateurs forment par exemple une architecture multiplexée pour la réalisation de différents services utiles pour le bon fonctionnement du véhicule et pour assister le conducteur et/ou les passagers du véhicule dans le contrôle du véhicule 10. Le ou les calculateurs et l'unité TCU communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Le système de communication sans fil permettant l'échange de données entre le véhicule 10 et le ou les dispositifs distants 111 correspond par exemple à :
- un système de communication véhicule à infrastructure V2I (de l'anglais « vehicle-to-infrastructure »), par exemple basé sur les standards 3GPP LTE-V ou IEEE 802.11p de ITS G5 ; ou
- un système de communication de type réseau cellulaire, par exemple un réseau de type LTE (de l'anglais « Long-Term Evolution » ou en français « Evolution à long terme »), LTE-Advanced (ou en français LTE-avancé) LTE 4G ou 5G ; ou
- un système de communication de type Wifi selon IEEE 802.11, par exemple selon IEEE 802.11n ou IEEE 802.11ac.

Le véhicule 10 embarque un système de navigation qui fournit des données de navigation sur la base desquelles une position géographique prédite (la plus probable) *MPP(t)* du véhicule 10 est déterminée à l'instant temporel t lorsque le véhicule 10 circule sur la route 101 d'un itinéraire routier calculé par le système de navigation. Les données de navigation peuvent être définies par le système de navigation à partir de données cartographiques obtenues à partir du système de communication sans fil et à partir d'une position courante du véhicule 10 donnée par le système de géolocalisation par satellite de type GPS.

Selon un exemple de réalisation particulier et non limitatif, le système de navigation peut être configuré pour fournir au moins une route alternative à une route d'un itinéraire qu'il a calculé pour que le véhicule 10 atteigne une destination. Le système de navigation peut également être configuré pour fournir des données représentatives de ladite route alternative à un autre calculateur du véhicule 10.

Selon un exemple de réalisation particulier et non limitatif, le véhicule 10 peut comprendre des moyens pour obtenir des premières données représentatives d'une popularité de la route 101 sur laquelle circule le véhicule 10 par exemple à partir du dispositif distant 111 via le système de communication sans fil. Des deuxièmes données représentatives d'une popularité de routes alternatives fournies par le système de navigation peuvent également être obtenues à partir du dispositif distant 111 via le système de communication sans fil. A cet effet, le dispositif distant 111 peut être un serveur configuré pour enregistrer des données représentatives de popularités de routes et pour fournir des données sur requête. La popularité d'une route peut être quantifiée par un score de popularité qui est calculé en fonction de la fréquentation habituelle de cette route, de la qualité de son revêtement, de point touristiques remarquables, de points de ravitaillement et/ou du trafic routier courant le long de cette route, par exemple.

Selon un exemple de réalisation particulier et non limitatif, le véhicule 10 peut embarquer un système de détection de marquage au sol. Un tel système de détection de marquage au sol reçoit des données d'une ou plusieurs caméras embarquées dans le véhicule 10 et configurée pour l'acquisition d'images de la voie de circulation empruntée par le véhicule 10, par exemple la portion de route située à l'avant et/ou sur les côtés du véhicule 10. Le système de détection de marquage au sol est ainsi configuré pour détecter les marquages au sol dans l'environnement du véhicule 10. Un traitement d'image est appliqué aux images obtenues de la ou les caméras du système de détection de marquage au sol pour déterminer la présence de lignes au sol et de classifier ces lignes en différentes catégories, par exemple pour déterminer si les lignes au sol correspondent à des lignes de rive ou des lignes centrales par exemple. Un exemple de traitement d'image pour détecter les lignes au sol est par exemple décrit dans le document WO2017194890A1.

Les lignes de marquage au sol 1001 et 1003 délimitant latéralement la route 101 sur laquelle circule le véhicule 10 sont ainsi détectées ainsi que la ligne centrale 1002 séparant la route 101 en deux voies de circulation de la route 101.

Un processus de contrôle du système de régulation adaptatif de vitesse prédictif du véhicule 10 est avantageusement mis en œuvre par le véhicule 10, par exemple par un ou plusieurs processeurs d'un ou plusieurs calculateurs embarqués dans le véhicule 10.

Dans une première opération, une position géographique prédite *MPP(t)* (la plus probable) du véhicule 10 à un instant t, est obtenue à partir de données de navigation du système de navigation.

Par exemple, la position géographique *MPP(t)* peut être définie dans un plan bidimensionnel par deux coordonnées X(t) et Y(t).

Par exemple, le système de régulation adaptatif de vitesse prédictif du véhicule 10 peut être configurée pour fournir la position géographique prédite *MPP(t),* c'est-à-dire les coordonnées X(t) et Y(t) dans le plan bidimensionnel, à partir de données de navigation se présentant sous la forme d'une trajectoire définie par un polynôme du type :

[Math. 1] $\left\{\begin{matrix}X \left(t\right) = {a}_{0} + {a}_{1} . t + {a}_{2} . {t}^{2} + ⋯ \\ Y \left(t\right) = {b}_{0} + {b}_{1} . t + {b}_{2} . {t}^{2} + ⋯\end{matrix}\right.$
avec *a*₀*, a*₁*, a*₂*, etc.* et *b*₀*, b*₁*, b*₂*, etc.,* des coefficients entiers.

Selon une variante, le système de régulation adaptatif de vitesse prédictif du véhicule 10 peut être configuré pour fournir la position géographique *MPP(t),* c'est-à-dire les coordonnées X(t) et Y(t) dans le plan bidimensionnel, à partir en interpolant des données de navigation se présentant sous la forme de points de contrôle définissant la trajectoire prédite du véhicule 10.

Selon une variante, le système de régulation adaptatif de vitesse prédictif du véhicule 10 peut être configuré pour fournir la position géographique *MPP(t),* c'est-à-dire les coordonnées X(t) et Y(t) dans le plan bidimensionnel, à partir de données de navigation représentant des courbures de la trajectoire du véhicule 10.

Dans une deuxième opération du processus, l'état d'activation de clignotants du véhicule 10 est obtenu et un premier facteur de correction est calculé selon l'état d'activation des clignotants du véhicule 10.

Par exemple, le premier facteur de correction est donné par :

[Math. 2] $\left\{\begin{matrix}Δ {X}_{1} \left(t\right) = {W}_{1} . B . Δ {X}_{t} \left(t\right) \\ Δ {Y}_{1} \left(t\right) = {W}_{1} . B . Δ {Y}_{t} \left(t\right)\end{matrix}\right.$
avec Δ*Xₜ*(*t*) et Δ*Yₜ*(*t*) des valeurs de décalages selon la direction indiquée par un clignotant activé du véhicule 10, B est une valeur binaire qui vaut 1 si un clignotant est activé et 0 sinon, et *W*₁ est une valeur de pondération prédéterminée définissant l'importance du premier facteur de correction dans la correction de la position géographique prédite *MPP(t).*

Dans une troisième opération du processus, une valeur d'angle *θ*(*t*) du volant du véhicule 10 est obtenue et un deuxième facteur de correction est calculé selon la valeur d'angle du volant du véhicule 10.

Par exemple, le deuxième facteur de correction est donné par :

[Math. 3] $\left\{\begin{matrix}Δ {X}_{2} \left(t\right) = {W}_{2} . θ \left(t\right) . {V}_{x} \left(t\right) \\ Δ {Y}_{2} \left(t\right) = {W}_{2} . θ \left(t\right) . {V}_{y} \left(t\right)\end{matrix}\right.$
avec *Vₓ*(*t*) et *V_{y}*(*t*) des valeurs des composantes de vitesse du véhicule 10 dans le plan bidimensionnel et *W*₂ est une valeur de pondération prédéterminée.

Dans une quatrième opération du processus, la position géographique *MPP(t),* c'est-à-dire les coordonnées X(t) et Y(t) de la position géographique *MPP(t)* dans le plan bidimensionnel, est corrigé par décalage de la position géographique prédite d'une valeur égale à la somme des premier et deuxième facteurs de correction.

Par exemple, les coordonnées X(t) et Y(t) de la position géographique *MPP(t)* dans le plan bidimensionnel sont corrigées par :

[Math. 4] $\left\{\begin{matrix}{X}_{c} \left(t\right) = X \left(t\right) + Δ {X}_{1} \left(t\right) + Δ {X}_{2} \left(t\right) \\ {Y}_{c} \left(t\right) = Y \left(t\right) + Δ {Y}_{1} \left(t\right) + Δ {Y}_{2} \left(t\right)\end{matrix}\right.$
avec *X_{c}*(*t*) et *Y_{c}*(*t*) les coordonnées de la position géographique prédite corrigée du véhicule 10 dans le plan bidimensionnel.

Selon une variante, dans une cinquième opération du procédé, des premières données représentatives de la popularité de la route sur laquelle circule le véhicule 10 et de deuxièmes données représentatives de la popularité des routes alternatives sur lesquelles pourraient circuler le véhicule 10 pour atteindre sa destination, peuvent être obtenues. Un troisième facteur de correction peut être calculé selon les premières et deuxièmes données obtenues et la position géographique prédite *MPP(t),* c'est-à-dire les coordonnées X(t) et Y(t) de la position géographique prédite *MPP(t)* dans le plan bidimensionnel, peut être corrigé, en outre, à partir du troisième facteur de correction.

Par exemple, le troisième facteur de correction est donné par :

[Math. 5] $\left\{\begin{matrix}Δ {X}_{3} \left(t\right) = {W}_{3} . P . Δ {X}_{r} \left(t\right) \\ Δ {Y}_{3} \left(t\right) = {W}_{3} . P . Δ {Y}_{r} \left(t\right)\end{matrix}\right.$
avec P est une valeur binaire qui vaut 1 pour indiquer si la route sur laquelle circule le véhicule 10 est la plus populaire des routes alternatives sur lesquelles il pourrait circuler pour atteindre sa destination, et 0 pour indiquer si la route sur laquelle circule actuellement le véhicule 10 n'est pas la plus populaire des routes, Δ*Xᵣ*(*t*) et Δ*Yᵣ*(*t*) des valeurs de décalage dans le plan bidimensionnel pour inciter le véhicule 10 à rejoindre une route alternative plus populaire que celle sur laquelle il circule actuellement et *W*₂ est une valeur de pondération prédéterminée.

Par exemple, les coordonnées X(t) et Y(t) de la position géographique prédite *MPP(t)* dans le plan bidimensionnel sont corrigées par :

[Math. 6] $\left\{\begin{matrix}{X}_{c} \left(t\right) = X \left(t\right) + Δ {X}_{1} \left(t\right) + Δ {X}_{2} \left(t\right) + Δ {X}_{3} \left(t\right) \\ {Y}_{c} \left(t\right) = Y \left(t\right) + Δ {Y}_{1} \left(t\right) + Δ {Y}_{2} \left(t\right) + Δ {Y}_{3} \left(t\right)\end{matrix}\right.$

Selon une variante, dans une sixième opération du procédé, des troisièmes données représentatives d'une position géographique de la ligne centrale de la route sur laquelle circule le véhicule 10 à l'instant t, c'est-à-dire des coordonnées *X_{lc}*(*t*) et *X_{lc}*(*t*) à l'instant t dans le plan bidimensionnel de la position géographique de la ligne centrale, peuvent être obtenues et, un quatrième facteur de correction peut être calculé selon des écarts de position géographique entre la position géographique de la ligne centrale et la position géographique prédite *MPP(t),* c'est-à-dire les coordonnées X(t) et Y(t) de la position géographique prédite *MPP(t)* dans le plan bidimensionnel.

Par exemple, le quatrième facteur de correction est donné par :

[Math. 7] $\left\{\begin{matrix}Δ {X}_{4} \left(t\right) = {W}_{4} . \left({X}_{lc}\left(t\right)-X\left(t\right)\right) \\ Δ {Y}_{4} \left(t\right) = {W}_{4} . \left({Y}_{lc}\left(t\right)-Y\left(t\right)\right)\end{matrix}\right.$
avec *W*₄ une valeur de pondération prédéterminée.

Par exemple, les coordonnées X(t) et Y(t) de la position géographique *MPP(t)* dans le plan bidimensionnel sont corrigées par :

[Math. 8] $\left\{\begin{matrix}{X}_{c} \left(t\right) = X \left(t\right) + Δ {X}_{1} \left(t\right) + Δ {X}_{2} \left(t\right) + Δ {X}_{4} \left(t\right) \\ {Y}_{c} \left(t\right) = Y \left(t\right) + Δ {Y}_{1} \left(t\right) + Δ {Y}_{2} \left(t\right) + Δ {Y}_{4} \left(t\right)\end{matrix}\right.$
ou par
[Math. 9] $\left\{\begin{matrix}{X}_{c} \left(t\right) = X \left(t\right) + Δ {X}_{1} \left(t\right) + Δ {X}_{2} \left(t\right) + Δ {X}_{3} \left(t\right) + Δ {X}_{4} \left(t\right) \\ {Y}_{c} \left(t\right) = Y \left(t\right) + Δ {Y}_{1} \left(t\right) + Δ {Y}_{2} \left(t\right) + Δ {Y}_{3} \left(t\right) + Δ {Y}_{4} \left(t\right)\end{matrix}\right.$

La figure 2 illustre schématiquement un dispositif 2 configuré pour le contrôle d'un système de régulation adaptative de vitesse prédictif d'un véhicule, par exemple le véhicule 10, selon un exemple de réalisation particulier et non limitatif de la présente invention. Le dispositif 2 correspond par exemple à un dispositif embarqué dans le véhicule 10, par exemple un calculateur.

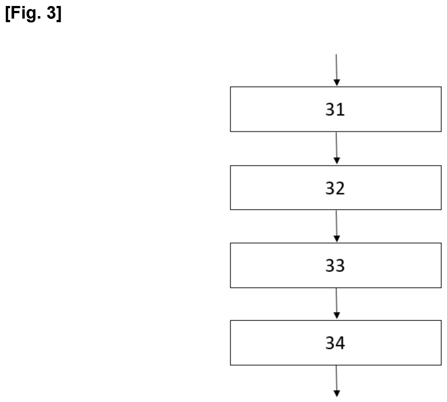

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un serveur distant ou le « cloud », d'autres nœuds du réseau ad hoc. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 2.

La figure 3 illustre un organigramme des différentes étapes d'un procédé contrôle d'un système de régulation adaptative de vitesse prédictif d'un véhicule, par exemple le véhicule 10, selon un exemple de réalisation particulier et non limitatif de la présente invention. Le procédé est par exemple mis en œuvre par un dispositif embarqué dans le véhicule 10, par exemple par un ou plusieurs processeurs d'un ou plusieurs calculateurs, ou par le dispositif 2 de la figure 2.

Dans une première étape 31, une position géographique prédite du véhicule est reçue à partir de données de navigation fournies par le système de navigation.

Dans une deuxième étape 32, un état d'activation de clignotants du véhicule est obtenu et un premier facteur de correction est calculé selon l'état d'activation obtenu des clignotants du véhicule.

Dans une troisième étape 33, une valeur d'angle du volant du véhicule est obtenue et un deuxième facteur de correction est calculé selon la valeur d'angle obtenue du volant du véhicule.

Dans une quatrième étape 34, la position géographique prédite du véhicule est corrigée par décalage de la position géographique prédite d'une valeur égale à la somme des premier et deuxième facteurs de correction.

Selon une variante, les variantes et exemples des opérations décrits en relation avec la figure 1 s'appliquent aux étapes du procédé de la figure 3.

Bien entendu, la présente invention ne se limite pas aux exemples de réalisation décrits ci-avant mais s'étend à un procédé de contrôle d'un système de régulation adaptative de vitesse prédictif d'un véhicule qui inclurait des étapes secondaires sans pour cela sortir de la portée de la présente invention. Il en serait de même d'un dispositif configuré pour la mise en œuvre d'un tel procédé.

La présente invention concerne également un système de régulation adaptative de vitesse prédictif d'un véhicule comprenant le dispositif 2 de la figure 2.

La présente invention concerne également un véhicule, par exemple automobile ou plus généralement un véhicule autonome à moteur terrestre, comprenant le dispositif 2 de la figure 2 ou le système de régulation adaptative de vitesse prédictif d'un véhicule ci-dessus.

## Revendications

1. Procédé de contrôle d'un système de régulation adaptative de vitesse prédictif d'un véhicule, ledit véhicule circulant sur une route d'un itinéraire routier calculé par un système de navigation embarqué du véhicule, ledit procédé comprenant les étapes suivantes :
- réception (31) d'une position géographique prédite du véhicule à partir de données de navigation fournies par le système de navigation ;
- obtention (32) d'un état d'activation de clignotants du véhicule et calcul d'un premier facteur de correction selon l'état d'activation obtenu des clignotants du véhicule ;
- obtention (33) d'une valeur d'angle du volant du véhicule et calcul d'un deuxième facteur de correction selon la valeur d'angle obtenue du volant du véhicule ; et
- correction (34) de la position géographique prédite du véhicule par décalage de la position géographique prédite d'une valeur égale à la somme des premier et deuxième facteurs de correction.

2. Procédé selon la revendication 1, pour lequel le premier facteur de correction est défini comme étant un produit d'une valeur de décalage selon une direction indiquée par un clignotant activé, d'une valeur binaire qui vaut 1 si un clignotant du véhicule est activé et 0 sinon, et d'une première valeur de pondération prédéterminée définissant l'importance du premier facteur de correction dans la correction de la position géographique prédite du véhicule.

3. Procédé selon la revendication 1 ou 2, pour lequel le deuxième facteur de correction est défini comme étant un produit de la valeur d'angle obtenue du volant du véhicule, de la vitesse du véhicule et d'une deuxième valeur de pondération prédéterminée définissant l'importance du deuxième facteur de correction dans la correction de la position géographique prédite du véhicule.

4. Procédé selon l'une des revendications précédentes, qui comprend en outre une étape d'obtention (35) de premières données représentatives d'une popularité de la route sur laquelle circule le véhicule et de deuxièmes données représentatives d'une popularité de routes alternatives sur lesquelles pourraient circuler le véhicule pour atteindre sa destination, de calcul d'un troisième facteur de correction selon les premières et deuxièmes données et de correction de la position géographique prédite du véhicule par décalage de la position géographique prédite d'une valeur égale à la somme des premier, deuxième et troisième facteurs de correction.

5. Procédé selon la revendication 4, pour lequel le troisième facteur de correction est défini comme étant un produit d'une valeur binaire qui vaut 1 pour indiquer si la route sur laquelle circule le véhicule est la plus populaire des routes alternatives sur lesquelles il pourrait circuler pour atteindre sa destination, et 0 pour indiquer si la route sur laquelle circule actuellement le véhicule n'est pas la plus populaire des routes, une valeur de décalage pour inciter le véhicule à rejoindre une route alternative plus populaire que celle sur laquelle il circule actuellement et d'une troisième valeur de pondération prédéterminée définissant l'importance du troisième facteur de correction dans la correction de la position géographique prédite du véhicule.

6. Procédé selon l'une des revendications précédentes, qui comprend en outre une étape d'obtention de troisièmes données représentatives d'une position géographique d'une ligne centrale de la route sur laquelle circule le véhicule, de calcul d'un quatrième facteur de correction selon des écarts de position géographique entre la position géographique de la ligne centrale et la position géographique prédite et de correction de la position géographique prédite du véhicule par décalage de la position géographique prédite d'une valeur égale soit à la somme des premier, deuxième et quatrième facteurs de correction soit à la somme des premier, deuxième, troisième et quatrième facteurs de correction.

7. Procédé selon la revendication 6, pour lequel le quatrième facteur de correction est défini comme étant un produit d'un écart de position géographique entre la position géographique de la ligne centrale et la position géographique prédite du véhicule et d'une quatrième valeur de pondération prédéterminée définissant l'importance du quatrième facteur de correction dans la correction de la position géographique prédite du véhicule.

8. Programme d'ordinateur comportant des instructions pour la mise en œuvre du procédé selon l'une quelconque des revendications précédentes, lorsque ces instructions sont exécutées par un processeur.

9. Dispositif (2) de contrôle d'un système d'aide à la conduite, dit système ADAS, d'un véhicule, ledit dispositif (2) comprenant une mémoire (21) associée à au moins un processeur (20) configuré pour la mise en œuvre des étapes du procédé selon l'une quelconque des revendications 1 à 7.

10. Véhicule (10) comprenant le dispositif (2) selon la revendication 9.
